# EUROPÄISCHE PATENTANMELDUNG

(11) **EP 1 895 125 A2**
(43) Veröffentlichungstag der Anmeldung: **05.03.2008**
(21) Anmeldenummer: 07114724.3
(22) Anmeldetag: 22.08.2007
(51) Int. Cl.: F02C 7/32

(54) **Generator-Starter-Anordnung für ein Gasturbinentriebwerk**

(30) Priorität: 01.09.2006 DE 102006041323
(71) Anmelder: Rolls-Royce Deutschland Ltd & Co KG, 15827 Blankenfelde-Mahlow (DE)
(72) Erfinder: Lück, Rudolf, 14558, Nuthetal (DE)
(74) Vertreter: Wablat, Wolfgang

(57) **Zusammenfassung**

Bei einer Generator-Starter-Anordnung für ein Gasturbinentriebwerk zur Versorgung des Flugzeugs mit elektrischer Energie und zum Anlassen des Triebwerks wird der Rotor (18) des Generators bzw. Starters von einem der Rotoren (4) des Hochdruckkompressors (1) des Triebwerks gebildet, der an einzelnen Schaufelspitzen Magnete (12) aufweist, wobei der Hochdruckkompressor in diesem Bereich von einem Stator (17) des Generators bzw. Starters umgeben ist. Mit einer derartigen Generator-Starter-Anordnung kann einer hoher Energiebedarf des Flugzeug gedeckt werden, ohne dass Stabilitäts- oder Gewichtsprobleme am Triebwerk auftreten. Zudem ist die Anordnung für Wartungs- und Reparaturarbeiten leicht zugänglich.

## Beschreibung

Die Erfindung betrifft eine Generator-Starter-Anordnung für ein Gasturbinentriebwerk, die einen aus ringförmig angeordneten elektrischen Spulen bestehenden Stator und einen an die Hochdruckwelle des Triebwerks angeschlossenen, mit Magneten bestückten Rotor aufweist.

Die Entnahme elektrischer Energie am Triebwerk für die Nutzung im Flugzeug erfolgt üblicherweise mit einem über eine radiale Abtriebswelle an die Hochdruckwelle gekoppelten Generator, der auch als Starter zum Anlassen des Triebwerks genutzt wird. Bis zu einem bestimmten Betrag der Leistungsentnahme hat sich dieses Prinzip auch bewährt, bereitet aber bei Flugzeugen mit einem sehr hohen - beispielsweise über 1000 kW/Triebwerk liegenden - Energiebedarf insofern Schwierigkeiten, als sich daraus zum einen Stabilitätsprobleme am Kompressor ergeben und zum anderen das erhöhte Gewicht des Generators bzw. Starters eine ungünstige Gewichtsverteilung am Triebwerk zur Folge hat. Die radiale Abtriebswelle und das zugehörige Getrieberad sind zudem konstruktiv aufwendig und schwer. Bei den sogenannten eingebetteten Generatoren kommt als weiterer Nachteil ein erheblicher Montage- sowie Wartungs- und Reparaturaufwand hinzu.

Der Erfindung liegt die Aufgabe zugrunde, eine Generator-Starter-Anordnung für ein Gasturbinentriebwerk anzugeben, die bei geringem Konstruktions-, Montage- und Wartungsaufwand eine hohe Leistungsentnahme für das Flugzeug ermöglicht.

Erfindungsgemäß wird die Aufgabe mit einer Generator-Starter-Anordnung gemäß den Merkmalen des Patentanspruchs 1 gelöst. Vorteilhafte Weiterbildungen der Erfindung sind Gegenstand der Unteransprüche.

Kern der Erfindung ist die Ausbildung eines der Rotoren des Hochdruckkompressors als Rotor des Generators bzw. Startermotors. An bestimmten Schaufelspitzen des betreffenden Kompressorrotors sind zu diesem Zweck Magnete angebracht und der Hochdruckkompressor ist in diesem Bereich von einem Stator, bestehend aus einem mit elektrischen Spulen bestückten ferromagnetischen Eisenring umgeben. Aufgrund der koaxialen Anordnung und Integrierung in den Hochdruckkompressor kann der Generator für eine hohe Leistungsentnahme ausgebildet sein, ohne dass Gewichts- oder Gewichtsverteilungsprobleme auftreten, zumal die üblicherweise erforderliche Abtriebswelle und das Getriebe, die schwer und konstruktiv aufwändig sind, entfallen. Ein Vorteil gegenüber den sogenannten eingebetteten Generatoren besteht zudem darin, dass die erfindungsgemäße Generator-Stator-Anordnung für Reparatur- und Wartungszwecke mit geringem Aufwand zugänglich ist.

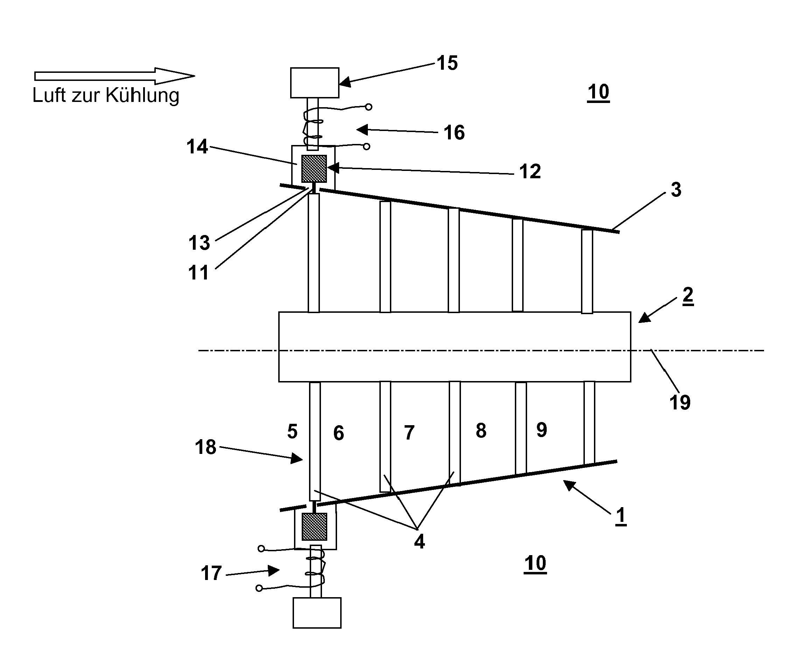

Ein Ausführungsbeispiel der Erfindung wird anhand der Zeichnung, in deren einziger Figur eine Generator-Starter-Anordnung in Verbindung mit dem Kompressor einer Fluggasturbine schematisch dargestellt ist, näher erläutert.

Die Zeichnung zeigt in schematischer Darstellung einen mehrstufigen Hochdruckkompressor 1, von dem der Einfachheit halber nur die an die Hochdruckwelle 2 angeschlossenen, von einem Gehäuse 3 umgebenen Kompressorrotoren 4 der ersten bis fünften Kompressorstufe 5 bis 9, bestehend aus Rotorscheiben mit an diesen angebrachten Kompressorschaufeln, wiedergegeben sind. Das Gehäuse 3 ist von einem Bypasskanal 10 umgeben, in dem Kühlluft strömt. An einzelnen Kompressorschaufeln des Kompressorrotors 4 der ersten Kompressorstufe 5 ist - über einen Steg 11 - ein Magnet 12 befestigt. Die als Fest- oder Elektromagnete ausgeführten Magnete 12 sind in regelmäßigem Abstand am Umfang des Kompressorrotors 4 angeordnet, bewegen sich aber aufgrund der einen Schlitz 13 im Gehäuse 3 durchgreifenden Stege 11 in dem Bypasskanal 10, und zwar geschützt in einer am Außenumfang des Gehäuses 3 vorgesehen Ringkammer 14. Der Kompressorrotor 4 bildet zusammen mit den Magneten 12 den Rotor 18 der Generator-Starter-Anordnung. Die erste Kompressorstufe 5 umschließt im Abstand von den Magneten 12 bzw. der Ringkammer 14 ein aus einem ferromagnetischen Eisenring 15 mit an diesem in regelmäßigem Abstand angebrachten elektrischen Spulen 16 gebildeter Stator 17. Der Eisenring 15 besteht aus Gründen der einfachen Montage und Wartung aus zwei oder mehreren Segmenten.

Auf diese Weise steht ein über die Hochdruckwelle 2 und den Hochdruckkompressor 1 betriebener Generator zur Energieerzeugung und ein die Hochdruckwelle 2 über den Hochdruckkompressor 1 antreibender Motor zum Anlassen des Triebwerks zur Verfügung. Im Generatorbetrieb wird nach dem Gleichrichten der in den Spulen 16 erzeugten Spannung eine pulsierende Gleichspannung entnommen. Bei der Benutzung als Motor (Starter) werden die Spulen 16 über eine Leistungselektronik an eine Spannungsquelle angeschlossen, um das Triebwerk zu starten.

Der zuvor beschriebene Generator bzw. Starter kann aufgrund der koaxialen, an einen Kompressorrotor gekoppelten Anordnung mit in der Triebwerksachse 19 liegendem Schwerpunkt entsprechend der gewünschten hohen Leistungsentnahme für das Flugzeug ausgelegt und dimensioniert werden, ohne dass durch ein entsprechend der höheren Leistungsentnahme höheres Gewicht oder die Gewichtsverteilung Probleme entstehen. Zudem entfallen die nach dem Stand der Technik erforderliche schwere und aufwändige Abtriebwelle und das groß dimensionierte Getrieberad. Die Generator-Starter-Anordnung ist für Wartung und Reparatur leicht zugänglich. Die im Bypasskanal strömende Luft kann vorteilhaft zur Kühlung des Generators genutzt werden.

### Bezugszeichenliste

- 1: Hochdruckkompressor
- 2: Hochdruckwelle
- 3: Gehäuse
- 4: Rotoren
- 5 - 9: 1. bis 5. Kompressorstufe
- 10: Bypasskanal
- 11: Steg
- 12: Magnet
- 13: Schlitz in 3
- 14: Ringkammer
- 15: ferromagnetischer Eisenring
- 16: elektr. Spulen
- 17: Stator
- 18: Rotor
- 19: Triebwerksachse

## Patentansprüche

1. Generator-Starter-Anordnung für ein Gasturbinentriebwerk, die einen aus ringförmig angeordneten Spulen bestehenden Stator (17) und einen an die Hochdruckwelle (2) des Triebwerks angeschlossenen, mit Magneten (12) versehenen Rotor (18) aufweist, **dadurch gekennzeichnet, dass** der Rotor (18) von einem an einzelnen Kompressorschaufelspitzen mit Magneten (12) bestückten Kompressorrotor (4) des Hochdruckkompressors (1) des Triebwerks gebildet ist, und der Hochdruckkompressor (1) in diesem Bereich von einem den Stator (17) bildenden ferromagnetischen, mit elektrischen Spulen (16) bestückten Eisenring (15) umgeben ist.

2. Generator-Starter-Anordnung nach Anspruch 1, **dadurch gekennzeichnet, dass** die Magnete (12) über Stege (11) mit den Kompressorschaufelspitzen verbunden sind, die einen Schlitz (13) im Gehäuse (3) des Hochdruckkompressors (1) durchgreifen, wobei die Magnete (12) und der Stator (17) in einem den Hochdruckkompressor umgebenden Bypasskanal (10) angeordnet und gekühlt sind.

3. Generator-Starter-Anordnung nach Anspruch 2, **dadurch gekennzeichnet, dass** die Magnete (12) geschützt in einer an die Außenseite des Gehäuses (3) anschließenden Ringkammer (14) umlaufen.

4. Generator-Stator-Anordnung nach Anspruch 1, **dadurch gekennzeichnet, dass** der Rotor (18) von der ersten, zweiten, dritten usw. Kompressorstufe (5) gebildet ist.

5. Generator-Starter-Anordnung nach Anspruch 1, **dadurch gekennzeichnet, dass** der ferromagnetische Eisenring (15) aus einzelnen Segmenten zusammengesetzt ist.

6. Generator-Starter-Anordnung nach Anspruch 1, **dadurch gekennzeichnet, dass** die Magnete (12) Permanent- oder Elektromagnete sind.
